# FASCICULE DE BREVET EUROPEEN

(11) **EP 0 941 773 B1**
(45) Date de publication et mention de la délivrance du brevet: **29.10.2003**
(21) Numéro de dépôt: 99400595.7
(22) Date de dépôt: 11.03.1999
(51) Int. Cl.: B05D 7/24, C03C 17/25

(54) **Procédé de dépôt de couches à base d'oxyde(s) métallique(s)**
Verfahren zum Ablagern einer Metalloxyd(en)schicht
Process for depositing metallic oxide(s) layers

(30) Priorité: 13.03.1998 FR 9803152
(43) Date de publication de la demande: 15.09.1999
(73) Titulaire: SAINT-GOBAIN GLASS FRANCE, 92400 Courbevoie (FR)
(72) Inventeur: Minami, Tsutomu, Osaka.sayamashi J-598-0023, Osaka-fu (JP); Tadanaga, Kiyoharu, Sakari, Osaka 599 (JP)
(74) Mandataire: Renous Chan, Véronique

(56) Documents cités:
- WO-A-98/34876
- FR-A- 2 184 653
- FR-A- 2 254 619
- US-A- 5 156 884
- PATENT ABSTRACTS OF JAPAN vol. 018, no. 004 (C-1149), 6 janvier 1994 & JP 05 247657 A (NISSHA PRINTING CO LTD), 24 septembre 1993
- PATENT ABSTRACTS OF JAPAN vol. 017, no. 566 (E-1446), 13 octobre 1993 & JP 05 166423 A (ASAHI GLASS CO LTD), 2 juillet 1993
- PATENT ABSTRACTS OF JAPAN vol. 018, no. 557 (P-1817), 24 octobre 1994 & JP 06 202092 A (CANON INC), 22 juillet 1994
- PATENT ABSTRACTS OF JAPAN vol. 095, no. 006, 31 juillet 1995 & JP 07 082526 A (ASAHI GLASS CO LTD), 28 mars 1995
- PATENT ABSTRACTS OF JAPAN vol. 097, no. 010, 31 octobre 1997 & JP 09 157855 A (KANSAI SHIN GIJUTSU KENKYUSHO:KK), 17 juin 1997

## Description

L'invention concerne un procédé de dépôt de couches à base d'oxyde(s) métallique(s), et plus particulièrement celles qui sont au moins légèrement conductrices électriquement. Elle s'intéresse plus particulièrement aux couches qui par leurs caractéristiques propres et leurs épaisseurs sont transparentes, sans exclure cependant les couches opaques.

L'invention s'intéresse notamment au dépôt de telles couches sur des substrats transparents, du type substrat verrier ou organique à base de polymères. Beaucoup de produits à base de substrats transparents ont en effet besoin de telles couches, soit sous forme de revêtement continu, ce qui peut être le cas par exemple de couche à fonction anti-statique, à conductivité peu élevée, ou à fonction de chauffage, soit sous forme de revêtement discontinu, gravé selon un motif donné. C'est par exemple le cas des substrats ayant besoin d'électrodes/éléments conducteurs avec une bonne voire une haute résolution : il peut s'agir des électrodes des verres d'écrans émissifs du type écran plat, des électrodes des cellules photovoltaïques ou encore des réseaux d'éléments conducteurs de vitrages chauffants, vitrages munis d'antenne ou de vitrages à revêtement conducteur à fonction d'écran vis-à-vis des rayonnements électromagnétiques.

Beaucoup de techniques de dépôt ont déjà été étudiées pour ce type de couche. Ainsi, il est connu de fabriquer des couches à base d'oxyde métallique ou d'oxyde de silicium par le procédé dit « sol-gel » dont le principe s'apparente à la synthèse des polymères organiques et consiste à former un réseau d'oxyde par polymérisation de précurseurs moléculaires en solution du type alkoxyde métallique, par hydrolyse puis condensation progressive à température ambiante. Un traitement thermique permet en dernière étape de sécher, densifier la couche d'oxyde obtenue.

Ce procédé est intéressant en ce sens qu'il est assez souple d'utilisation, assez simple de mise en oeuvre. Cependant, il comporte un certain nombre de limites. Ainsi, il ne permet pas toujours d'obtenir les performances de couche optimales, à composition chimique donnée. En outre, jusque-là, il ne permet d'obtenir que des couches continues, qu'il faut ensuite graver par un procédé indépendant si l'on souhaite une couche discontinue à motif.

L'invention a alors pour but de remédier à ces inconvénients, en proposant un procédé amélioré de synthèse de couches à base d'oxyde(s) métallique(s) par voie sol-gel, qui permette notamment d'obtenir des couches plus performantes et/ou des couches aussi bien continues que discontinues.

L'invention a tout d'abord pour objet un procédé de dépôt par voie sol-gel d'une couche continue ou discontinue gravée à base d'oxyde d'étain ou à base d'oxyde d'étain dopé, notamment avec un halogène du type fluor SnO₂:F, ou avec un métal de la colonne Va du tableau périodique du type oxyde d'étain dopé à l'arsenic SnO₂:As ou à l'antimoine SnO₂:Sb, ou à base d'oxyde d'indium dopé à l'étain ITO, sur un substrat (1), notamment transparent, procédé comportant au moins les phases suivantes :
(a) préparation d'un sol à partir d'au moins un précurseur métallique, d'au moins un agent chélatant/stabilisant, éventuellement d'au moins un solvant et/ou d'au moins un précurseur dopant,
(b) dépôt du sol en couche sur au moins une partie d'une des faces du substrat (1),
(c) irradiation par des rayons ultraviolets d'au moins une partie du sol déposé en couche sur le substrat (1),
(d) traitement thermique d'au moins la partie du sol qui a été irradiée par les rayons ultraviolets.

On comprend au sens de l'invention par couche « discontinue », une couche que l'on obtient directement sous une forme non continue, selon un motif donné, comme celles que l'on obtient usuellement par gravure à partir de couche continue.

Par souci de simplicité, on ne mentionne dans toutes les étapes du procédé décrites plus haut que la constitution et l'utilisation d'un « sol », selon une terminologie comme dans le domaine des procédés sol-gel. Cependant, il est clair pour le spécialiste que ce « sol », une fois déposé en couche sur le substrat, est amené à se transformer en gel par une modification de sa viscosité entraînée par les réactions entre les différentes espèces chimiques contenues dans le sol.

Selon un mode de réalisation du procédé selon l'invention, la phase (c) d'irradiation est répétée n fois, avec n ≥ 1.

Selon un autre mode de réalisation du procédé, non exclusif du précédent, c'est la phase (d) de traitement thermique qui est répétée p fois, avec p ≥ 1.

Une variante préférée consiste ainsi à ce qu'au moins la phase (c) d'irradiation et/ou au moins la phase (d) de traitement thermique soit répétée une fois, de façon à alterner phase(s) d'irradiation et phase(s) de traitement thermique (sans exclure d'interposer d'autres étapes de traitement entre phase d'irradiation et phase de traitement thermique). (Il est aussi possible de faire précéder la première phase (c) d'irradiation d'une phase de traitement thermique).

En fait, dans un procédé par voie sol-gel habituel, on trouve généralement le principe des phases (a), (b) et (d) du procédé de l'invention, puisque ce procédé repose sur le dépôt d'un sol qui se transforme en gel et que l'on densifie en oxyde en final par traitement thermique. L'invention a découvert qu'intercaler ainsi dans le procédé une irradiation par des rayons ultraviolets (ci-après désignés U.V.) de la couche de sol modifiait significativement la façon dont la couche se synthétisait : il est en effet apparu que les rayons U.V. favorisaient une déstabilisation des complexes qui tendent à se former entre d'une part les précurseurs métalliques et d'autre part les agents stabilisants/chélatants contenus dans le sol. Cette déstabilisation entraînerait ainsi une pré-polymérisation contrôlée des précurseurs métalliques.

Cette influence inattendue des rayons U.V. a pu alors être exploitée dans le cadre de l'invention, notamment de deux façons différentes pour en tirer avantage dans le cas où l'on souhaite obtenir une couche à base d'oxyde métallique qui soit continue, on peut opérer sur l'ensemble de la couche de sol, la ou les phases (c) d'irradiation U.V., et la ou les phases (d) de traitement thermique. Parvenir alors à mieux contrôler la polymérisation de la couche grâce aux U.V. est alors tout-à-fait avantageux, on a pu ainsi remarquer que dans certains cas au moins on pouvait, pour une composition chimique de sol donnée, améliorer certaines propriétés finales de la couche, notamment la rendre plus conductrice électriquement. Il a pu aussi être observé que l'exposition à des U.V. pouvait influer sur la température de cristallisation de l'oxyde, et cela sans compliquer excessivement le procédé de fabrication de la couche.

Dans le cas où l'on veut obtenir une couche discontinue selon un motif donné, l'exposition aux U.V. a permis d'obtenir directement une telle couche, sans avoir à graver a posteriori la couche. En effet, il s'est avéré que l'on pouvait pendant la phase (c) ou au moins une des phases (c) irradier aux U.V. la couche de sol non pas dans son ensemble mais sélectivement, dans les zones qui vont correspondre aux zones du substrat où l'on veut déposer l'oxyde. On peut ainsi provoquer la pré-polymérisation de la couche de sol dans des zones localisées, alors que dans les zones non irradiées les précurseurs métalliques restent stabilisés, bloqués essentiellement sous forme de complexe. De fait, comme cela sera détaillé par la suite, on peut alors éliminer relativement aisément les zones de sol non irradiées, et ne conserver que les zones irradiées, pré-polymérisées qu'il suffit ensuite de durcir thermiquement de façon conventionnelle pour obtenir la couche discontinue au motif voulu, déterminé par la façon sélective dont le sol a été irradié.

Cette irradiation sélective peut être réalisée de différentes façons. De façon non limitative, on peut notamment utiliser une source de rayons U.V. apte à canaliser le rayonnement, en mouvement relatif par rapport au substrat, les rayons U.V. frappant le substrat sur sa face munie de la couche de sol ou sur sa face opposée, s'il est en un matériau essentiellement transparent aux U.V.

Une autre façon d'obtenir une irradiation sélective consiste à interposer un masque entre la couche de sol et la source d'émission des rayons U.V., là encore, soit au-dessus de la couche de sol, soit du côté de la face opposée du substrat s'il est transparent aux U.V.

Le masque peut être maintenu à distance de la couche de sol, la source U.V. étant orientée de façon appropriée par rapport au masque pour qu'il y ait la projection voulue d'U.V. sur la couche de sol. On peut ainsi déposer par exemple le masque sur un substrat transparent aux U.V., du type substrat verrier que l'on vient placer au-dessus de la couche de sol, soit à une distance donnée, soit de façon à ce que la face non masquée soit au contact de la couche de sol.

Le masque peut également être mis au contact direct de la couche de sol, il est alors préférable de traiter légèrement la couche au préalable (chauffage très modéré par exemple), de façon à lui donner la viscosité suffisante pour supporter uniformément le masque.

Pour résumer, une phase d'irradiation sélective aux U.V. peut comporter les étapes suivantes (en considérant que le sol a déjà pris la consistance d'un gel) :
① - dépôt du masque sur ou à proximité de la couche de gel, notamment dépôt du masque sur un second substrat de type verrier que l'on dispose au-dessus de la couche de gel,
② - irradiation sélective de la couche de gel par les U.V. à travers le masque,
③ - retrait du masque,
④ - élimination des zones de la couche de gel qui étaient masquées lors de l'irradiation.
(Il va de soi que si l'on prévoit plusieurs phases d'irradiation sélective dans le procédé, on peut n'effectuer les étapes 3 et/ou 4 que lors d'au moins une des phases, notamment la dernière, et pas pour chacune d'entre elle).

Le retrait du masque peut être obtenu de différentes manières suivant sa nature chimique notamment. Le plus simple est de le retirer par un pelage, par traction mécanique s'il est déposé directement sur la couche de gel. Dans le cas où il est déposé sur un substrat disposé au-dessus de la couche de gel, il suffit de retirer ce dernier.

L'élimination des zones masquées, non irradiées peut également se faire de différentes façons, notamment par voie chimique, c'est-à-dire par dissolution dans un solvant ou mélange de solvants appropriés, généralement organiques. Elle peut être réalisée par immersion du substrat dans le bain de solvant(s), par un rinçage par pulvérisation dudit (desdits) solvant(s), sur la couche de sol ... Les zones irradiées vont, elles, résister à ce traitement d'élimination puisque leur condensation est beaucoup plus poussée.

Sont maintenant détaillées de façon non limitative les différentes espèces chimiques pouvant intervenir dans la phase (a) de préparation du sol selon l'invention.

Le ou les précurseurs métalliques sont avantageusement choisis parmi les sels métalliques du type halogénures, les composés organométalliques, des alkoxydes métalliques. L'invention s'intéressant plus particulièrement à l'obtention de couches à base d'oxyde d'étain, on peut ainsi citer SnCl₂, SnCl₄, le Sn-2-éthylhexanoate, des alkoxydes de formulation Sn(OR)₄ ou SnR'(OR)₃, avec R, R' des radicaux identiques ou différents, carbonés, linéaires ou ramifiés, du type alkyls ayant de 1 à 6 C tel que le tétraisopropoxyde d'étain Sn(O-i-Pr)₄.

Les agents chélatants/stabilisants sont de préférence choisis parmi des molécules organiques appropriées, à fonction cétone et/ou ester, tout particulièrement appartenant à la famille des β-dicétones. On peut citer à titre d'exemple le 2,4-pentanedione, le 1-phényl-1,3 butanedione, l'éthylacétoacétate.

Sans dopant, la couche d'oxyde métallique peut être isolante, en se comportant comme un matériau diélectrique, ou légèrement conductive, notamment lorsqu'il y a des lacunes en oxygène dans le réseau de l'oxyde. Cependant, si l'on veut garantir un niveau de conduction électrique relativement élevé, il est nécessaire de doper l'oxyde, en ajoutant dans le sol le précurseur d'un dopant. Ce dopant peut être un halogène, le précurseur porteur de l'halogène pouvant être par exemple un acide organique halogéné, notamment fluoré tel que l'acide trifluoroacétique. Le dopant peut être un métal, apte à se substituer au métal majoritaire de l'oxyde métallique formé . Si l'on veut doper une couche d'oxyde d'étain, un métal dopant adéquat sera choisi dans la colonne 5a du tableau périodique, du type As ou Sb, dont un précurseur peut être sous forme d'un halogénure métallique (SbCl₃ ou SbCl₅ par exemple).

Le solvant optionnel est de préférence essentiellement organique, notamment à fonction alcool du type éthanol, isopropanol, ou inorganique, par exemple à base d'une solution d'hydroxyde de sodium ou d'eau additionnée d'ammoniaque.

Dans la variante où l'on a recours à un masque pour opérer une irradiation aux U.V. sélective de la couche de sol, ce dernier peut être choisi à base de résine, du type photomasque déposé par exemple par photolithographie de façon connue. Le masque peut aussi être déposé sur un substrat de type verrier, comme évoqué plus haut.

La phase (b) de dépôt du sol peut être réalisée par toutes les techniques connues permettant de déposer des couches (le sol d'épaisseur régulière, par exemple dans une gamme d'épaisseurs comprise entre 5 et 1000 nm, et généralement d'au moins 10 nm . On peut ainsi déposer le sol par effet centrifuge ('spin coating » selon la dénomination anglo-saxonne), par trempé, par enduction laminaire, par pulvérisation, par des techniques connues sous la dénomination anglo-saxonne de « roller coating » ou « meniscus coating ».

La (les) phase(s) (c) d'irradiation aux U.V. utilise(nt) de préférence principalement des rayonnements autour de 300 nm, notamment entre 250 et 360 nm, avec notamment une intensité lumineuse mesurée sur la couche de sol autour de 150 mW/cm², notamment entre 100 et 200 mW/cm².

La (les) phase(s) (d) de traitement thermique se fait (font) généralement à au moins 100°C, notamment entre 200 et 550°C. Les températures peuvent être ajustées dans cette gamme de façon à être compatibles avec la nature chimique des substrats : notamment s'ils sont en verre ou s'ils sont à base de polymère organique.

L'invention concerne également l'application du procédé selon l'invention au dépôt de couches sur des substrats transparents, verriers ou à base de polymère(s) organique(s), ou des substrats à base de matériau céramique ou vitrocéramique ou sur des substrats à base de silicium.

L'invention concerne également l'application du procédé au dépôt de couches continues ou discontinues à base d'oxyde d'étain, éventuellement dopé du type SnO₂:F, SnO₂:Sb ou SnO₂:As, ou encore à base d'oxyde d'indium dopé à l'étain ITO. Il s'est ainsi avéré que l'invention se prêtait particulièrement bien à l'obtention de couches gravées/à motif à base de SnO₂ à propriétés de conduction électrique. Or jusqu'à présent ces couches étaient considérées comme difficiles à graver par des techniques conventionnelles de gravure chimique, car ces couches sont connues pour être particulièrement résistantes chimiquement. L'invention concerne aussi une voie pour obtenir directement des couches discontinues à base de SnO₂. Ces couches ont généralement une épaisseur comprise entre 5 et 1000 nm, et notamment une épaisseur d'au moins 10 nm.

L'invention a enfin pour objet l'application du procédé selon l'invention à la fabrication d'électrodes/éléments conducteurs ou revêtements antistatiques dans différents domaines. Il peut s'agir de l'industrie verrière, par exemple en vue de fabriquer des réseaux conducteurs pour vitrage chauffant par effet Joule, ou des vitrages incorporant des antennes ou antistatiques, notamment pour équiper des véhicules, des avions. Le procédé selon l'invention peut également servir pour faire des revêtements à fonction de protection/d'écran vis-à-vis de rayonnements électromagnétiques, par exemple pour des vitrages de bâtiment situés à proximité d'aéroport. Il peut s'agir aussi de l'industrie des cellules photovoltaïques. Enfin, il peut s'agir de l'industrie électronique, par exemple en vue de fabriquer des faces avant ou faces arrière d'écrans émissifs du type écran plat, écran dit écran plasma, ou encore des écrans tactiles, et plus généralement tout type d'écran/vitrage susceptible de recevoir, transmettre ou d'émettre de rayonnement, notamment de la lumière visible.

L'invention a également pour objet le substrat précédemment décrit, se caractérisant par le fait qu'il comporte une couche continue ou discontinue/gravée à base d'oxyde(s) métallique(s) et obtenue par voie sol-gel selon le procédé également précédemment décrit.

Ce substrat peut être muni d'autres couches continues ou discontinues. Selon une variante préférée, il comporte au moins une autre couche mince, notamment en matériau diélectrique (par exemple à base d'oxyde(s) métallique(s) comme TiO₂, ZrO₂ ou d'oxyde, oxycarbure, oxynitrure de silicium), ladite (lesdites) couche(s) mince(s) se trouvant disposée(s) sous la couche selon l'invention. Cette « sous-couche est préférentiellement obtenue par voie sol-gel, sans exclure d'autres modes de dépôt (dépôt sous vide du type pulvérisation cathodique, dépôt CVD, ...). Elle peut avoir une épaisseur géométrique comprise entre 10 et 150 nm, notamment entre 15 et 80 nm ou entre 40 et 70 nm et remplir, selon sa nature chimique et son épaisseur, différents rôles (barrières aux alcalins du substrat verrier, couche d'ancrage, couche à fonction optique, ...). Elle est de préférence continue, mais peut aussi être gravée.

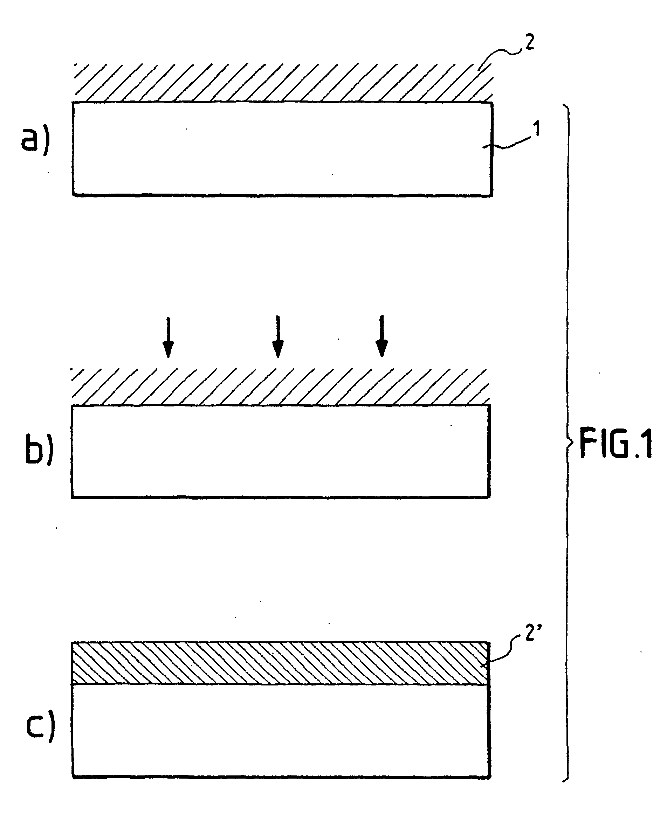

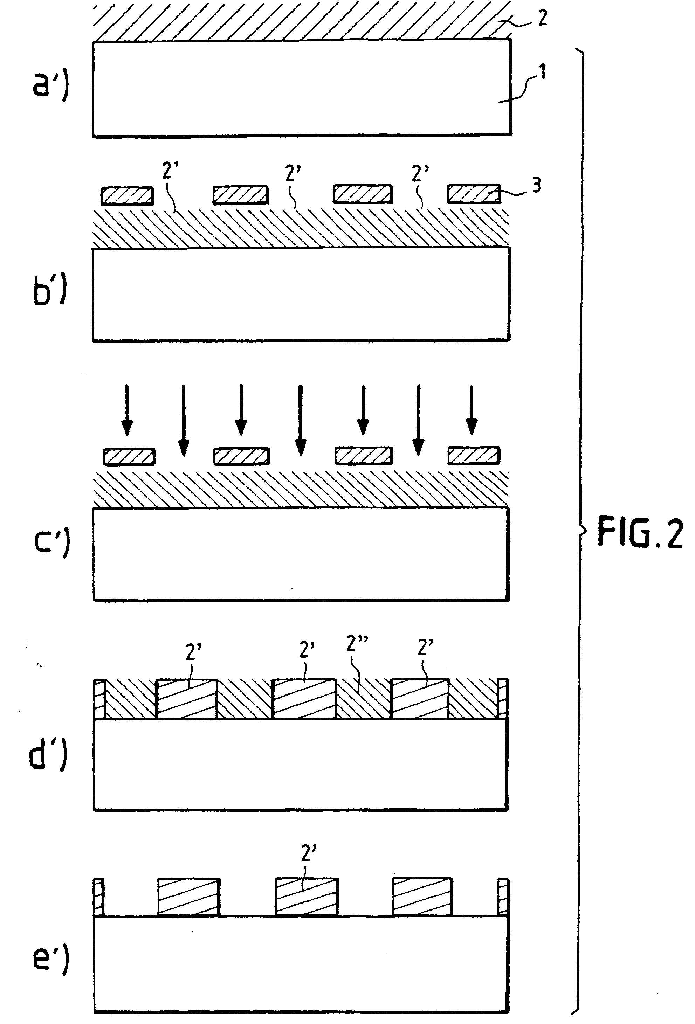

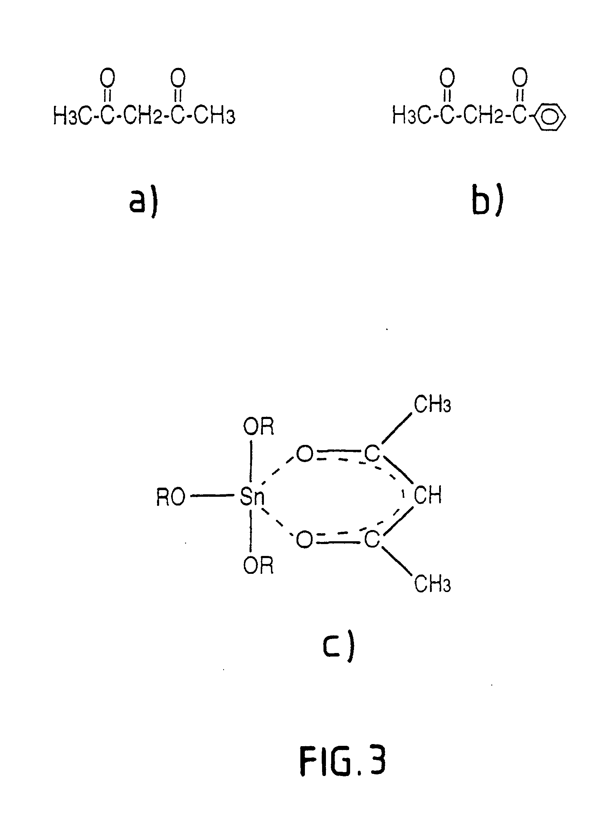

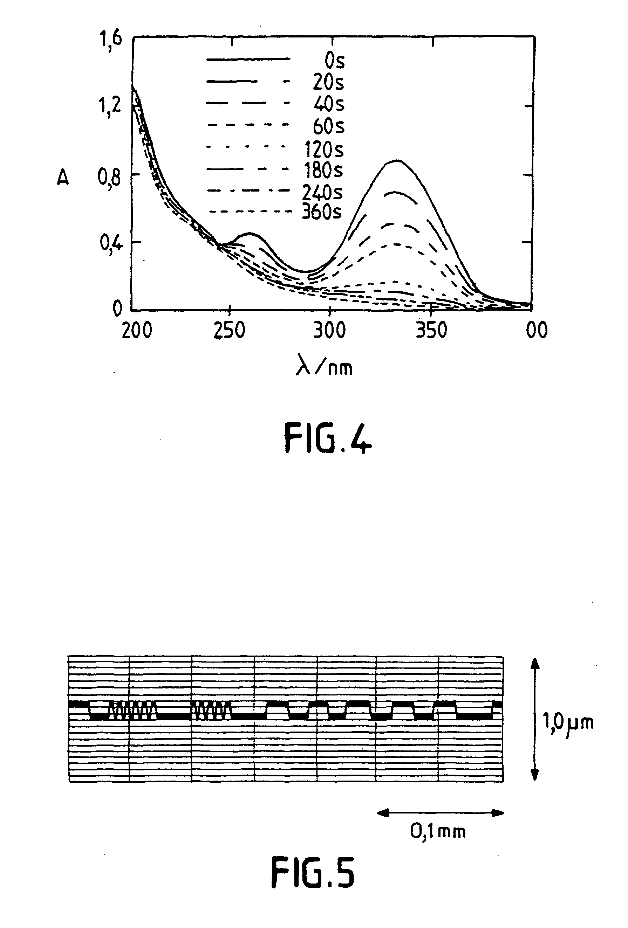

L'invention sera décrite ci-après plus en détails à l'aide d'exemples non limitatifs illustrés par les figures suivantes :
□ **figure 1 :** une représentation très schématique des étapes d'un procédé de dépôt de couche continue selon l'invention,
□ **figure 2 :** une représentation très schématique des étapes d'un procédé de dépôt de couche discontinue selon l'invention.
□ **figure 3 :** les structures chimiques d'agents chélatants des précurseurs métalliques du sol, et un exemple de complexe précurseur métallique/agent chélatant,
□ **figure 4** : le spectre d'absorption U.V/visible de la couche de sol pendant son irradiation aux U.V,
□ **figure 5** :le profil d'une couche à base de SnO₂ discontinue obtenue selon l'invention.

Dans la suite de la description détaillée, les substrats utilisés seront précisés selon chacun des exemples : il s'agit soit de substrats verriers flottés standards silico-sodo-calciques, soit des substrats verriers sans alcalin du type de ceux commercialisés par la société Corning sous la référence 7059, soit des substrats de SiO₂ ou de silicium.

D'autres compositions de verre également appropriées, notamment pour les applications dans le domaine de l'électronique, sont par exemple décrites dans les brevets WO96/11887, WO98/40320 et EP-0 854 117.

Tous les exemples concernent le dépôt de couches à base d'oxyde dopé, soit non dopé, soit dopé au fluor ou à l'antimoine, ce qui sera précisé dans chaque cas, et d'une épaisseur d'environ 100 nm (entre 10 et 1000 nm).

Les étapes principales des deux procédés de dépôt par voie sol-gel selon l'invention sont représentées schématiquement aux figures 1 et 2, la figure 1 se rapportant au dépôt d'une couche continue, la figure 2 se rapportant au dépôt d'une couche discontinue.

Selon la figure 1 :
→ dans une première étape (a), le substrat 1 est muni d'une couche uniforme régulière de sol 2 dont la composition sera détaillée dans les exemples et qui comprend au moins un précurseur d'étain et un agent chélatant de ce dernier, afin de le stabiliser et d'éviter une réaction trop rapide et incontrôlée des molécules de précurseurs métalliques entre elles. Le sol prend une consistante de gel par séchage et la couche de gel durcit,
→ selon une étape (b), l'ensemble de la couche 2 est soumise à un rayonnement U.V qui destabilise les complexes formés en une sorte de photolyse, ce qui entraîne une pré-polymérisation rapide de la couche par réactions en chaîne entre les précurseurs métalliques,
→ la couche ainsi polymérisée 2' doit ensuite subir selon une étape (c) un traitement thermique destiné à achever sa densification pour ne plus garder qu'une structure minérale d'oxyde métallique.

Selon la figure 2, il s'agit d'obtenir directement une couche à base d'oxyde d'étain selon un motif donné :
→ l'étape (a') consiste comme précédemment à déposer une couche de sol 2 régulière sur le substrat 1,
→ l'étape (b') consiste à déposer ensuite un masque à base de résine 3 par photolithographie au contact de la couche 2, dont on a ajusté préalablement la viscosité de façon appropriée,
→ l'étape (c') consiste à irradier par des rayons U.V l'ensemble couche 2 + masque 3. Le masque 3 filtrant les U.V, seules les zones 2' sont effectivement exposées aux U.V et « pré-polymérisent » sous l'effet du rayonnement,
→ l'étape (d') consiste à retirer le masque 3, par pelage par exemple, découvrant ainsi les zones 2" de la couche 2 qui n'ont pas été irradiées et qui n'ont donc pas été densifiées, pré-polymérisées comme les zones 2',
→ l'étape (e') consiste à éliminer les zones 2" non irradiées, ce qui peut être obtenu par un simple rinçage du substrat 1 avec un solvant organique adéquat, notamment à fonction alcool, ou par un solvant inorganique par exemple à base d'une solution d'hydroxyde de sodium ou d'eau avec de l'ammoniaque,
→ une dernière étape non représentée consiste à traiter thermiquement les zones 2' restantes, afin d'achever leur densification en oxyde métallique. On obtient donc directement une couche gravée selon un motif correspondant à celui que l'on a conféré au masque 3.

Une première série d'exemples 1 à 5 utilise un sol avec du tétraisopropylate d'étain comme précurseur métallique. La préparation des sols se fait de la façon suivante :
↪ on met le tétraisopropoxyde d'étain Sn(O-iPr)₄ en solution dans un solvant, l'isopropanol i-PrOH,
↪ on ajoute à la solution un agent chélatant du précurseur d'étain, à savoir suivant les exemples du 2,4-pentanedione appelé aussi acétyl acétone (AcAc) et représenté à la figure 3(a), ou du 1-phényl-1,3-butanedione appelé aussi benzoylacétone (BzAc) et représenté à la figure 3(b),
↪ on ajuste ensuite la viscosité du sol en ajoutant de l'isopropanol et de l'eau H₂O pour obtenir le sol.

L'agent chélatant stabilise le tétraisopropylate d'étain. Ainsi, l'acétylacétone forme des liaisons avec l'étain, par des réactions de substitution d'un groupe alkoxy de l'alkoxyde d'étain pour former le complexe représenté à la figure 3.

Le tableau 1 ci-dessous indique pour chacun des cinq exemples la composition exacte des sols, exprimée en moles, rapportée à 1 mole de précurseur d'étain.

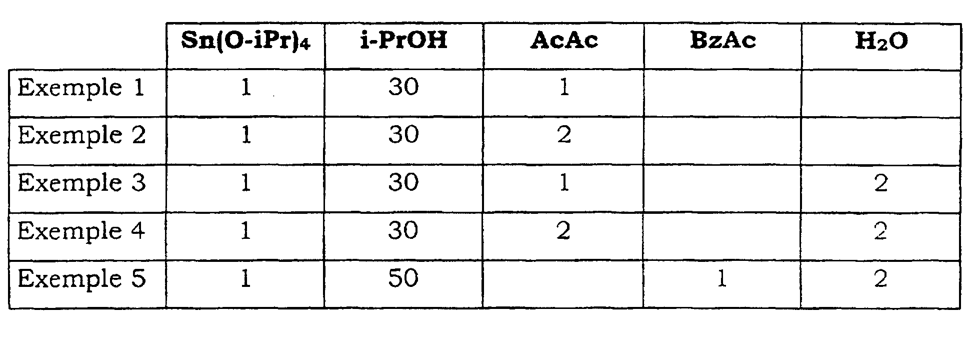

Une seconde série d'exemples 6 à 10 utilise un sol avec du dichlorure d'étain SnCl₂ comme précurseur d'étain. La préparation des sols se fait de la façon suivante :
↪ pour les exemples 6 à 9, on prépare un mélange de SnCl₂ et d'acétylacétone dans un rapport molaire 1/20, puis on ajoute soit rien (exemple 6), soit un dopant (exemples 7, 8, 9) du CF₃COOH pour l'exemple 7, du SbCl₃ pour l'exemple 8 et du SbCl₅ pour l'exemple 9, dans un rapport molaire dopant/SnCl₂ de 0,1,
↪ pour l'exemple 10, on prépare un mélange SnCl₂ + éthanol dans un rapport molaire 1/20, puis on ajoute un dopant SbCl₃ clans de l'éthanol (rapport molaire SbCl₃/SnCl₂ de 0,06). Enfin, on ajoute de l'acétylacétone dans de l'éthanol, avec un rapport molaire AcAc/SnCl₂ de 0,4.

● Les sols préparés selon les exemples 1 à 5 sont mise en oeuvre de la façon suivante :
   ↪ les substrats utilisés sont les substrats en SiO2, de dimensions 20 mm x 30 mm et d'épaisseur 1 mm
   ↪ chacun des cinq sols sont déposés en fine couche d'environ 20 à 500 nm d'épaisseur sur les verres par une technique de trempé (« dip coating ») avec une vitesse de retrait du verre hors du bain de sol d'environ 0,20 ou 0,4 mm/s,
   ↪ on obtient cinq substrats munis de cinq couches de sol qui prend rapidement la consistance d'un gel,
   ↪ on expose ensuite les cinq verres à une irradiation aux U.V de longueur d'onde 250-360 nm, avec une intensité lumineuse sur les films de gel d'environ 150 mW/cm²,
   ↪ on traite ensuite thermiquement les cinq verres à des températures comprises entre 100 et 600°C pour achever la transformation des gels en couche d'oxyde d'étain.

La figure 4 montre la modification progressive de !'absorption dans le visible et dans l'U.V de la couche de gel au fur et à mesure du déroulement de l'étape d'exposition aux U.V de la couche de gel selon l'exemple 5 : la bande d'absorption observée vers 335-nm au départ (qui correspond à des transitions π-π* dans le complexe formé par Sn(-O-iPr)₄ et BzAc), diminue fortement d'intensité et disparaît quasiment complètement après 360 secondes d'irradiation. Les complexes sont donc bien destabilisés par les U.V et disparaissent en quelques minutes. L'épaisseur des gels diminue d'environ 30% pendant l'irradiation aux UV.

Le tableau 2 ci-dessous indique pour l'exemple 3 les valeurs de conductivité électrique σ (U.V) en S/cm des couches de SnO₂ obtenues en fonction des températures T (°C) utilisées pour effectuer la dernière étape du traitement thermique. (Un exemple 3' a été réalisé de façon similaire à l'exemple 3, mais sur le substrat verrier de Corning référencé plus haut).

| **EXEMPLE 3** | **T** | **σ** |
|---|---|---|
| | 100 | 0,9.10⁻⁵ |
| | 200 | 5,0.10⁻⁵ |
| | 300 | 2,0.10⁻⁵ |
| | 400 | 7,0.10⁻² |
| | 500 | 1,8.10° |
| | 600 | 4,4.10° |
| **EXEMPLE 3'** | 450 | 5,0.10¹ |

● Dans des exemples ibis à 5bis, on utilise les mêmes sols des exemples 1 à 5, mais sur des substrats de silicium. Avant exposition des gels aux U.V, on les durcit légèrement par un séchage vers 50-100°C pendant quelques minutes et on dépose à leur surface ou à une certaine distance un substrat en verre muni d'un masque vendu par la société Edmund Scientific Company sous la dénomination de test target USAF 1951». Ce masque est sous forme de bandes parallèles de largeur d'environ 10 à 20 µm et espacées les unes des autres d'une distance de par exemple 20 à 50 µm. (Le pré-séchage des gels permet de leur faire atteindre une viscosité suffisante d'environ 10⁵ Pa.s).

On obtient des couches reproduisant sur une épaisseur d'environ 100 nm le motif du masque, avec une très bonne résolution. Cela peut se voir sur la figure 5, représentant pour l'un de ces exemples, le profil de la couche obtenu mesuré par un profilomètre de surface.
● Les sols préparés selon les exemples 6 à 9 sont mis en oeuvre de la façon suivante :
   ↪ les substrats utilisés sont des verres de Corning référencés plus haut,
   ↪ on dépose par effet centrifuge (« spin coating » en anglais) une couche de chacun des sols par substrat,
   ↪ on fait une irradiation aux U.V comme précédemment pour les exemples 1 à 5, pendant 10 minutes,
   ↪ on fait ensuite un traitement thermique d'environ 5 minutes, comme précédemment, à des températures comprises entre 350 et 550°C,
   ↪ on répète 4 fois en les alternant les irradiations U.V et les traitements thermiques, on termine par un traitement thermique à la même température que les précédents pendant 1 heure,
   ↪ enfin, on mesure la résistivité des couches finales avec deux électrodes d'argent.

Le tableau 3 résume pour chacun des exemples, la nature de la couche, les températures de traitement thermique T (°C), et la résistivité ρ en (Ω cm) correspondante :

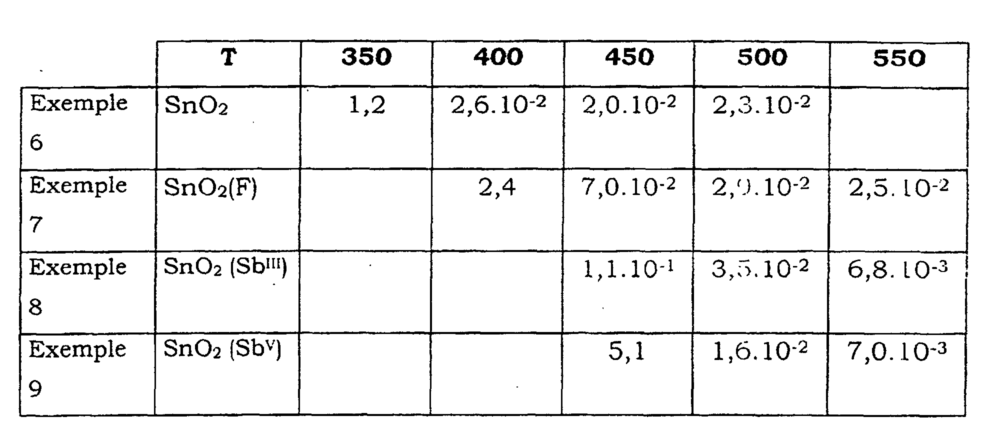

● le sol préparé selon l'exemple 10 a été déposé sur un substrat verrier du type Corning par effet centrifuge (« spin coating ») en trois fois, avec, après chaque dépôt, un traitement thermique bref. Il a ensuite subi une irradiation aux U.V 10 minutes comme précédemment, puis un traitement thermique final d'une heure à des températures de 350 à 550°C. Les couches obtenues présentent une résistivité comprise entre 1,5.10⁻² et 8.10⁻³ Ω.cm suivant la température de traitement, la résistivité la plus faible étant obtenue vers 550°C.

Les exemples 6 à 10 peuvent être refaits en utilisant cette fois le masque comme pour les exemples ibis à 5bis pour obtenir des couches à motif.

En conclusion, l'invention a mis au point un nouveau type de synthèse de couches par voie sol-gel, qui, en faisant intervenir des traitements aux U.V., permet de mieux en contrôler la fabrication et de graver « in-situ » lors même de leur formation, des couches à base de SnO₂ pourtant connues pour leur grande dureté.

## Revendications

1. Procédé de dépôt par voie sol-gel d'une couche continue ou discontinue gravée à base d'oxyde d'étain ou à base d'oxyde d'étain dopé, notamment avec un halogène du type fluor SnO₂:F, ou avec un métal de la colonne Va du tableau périodique du type oxyde d'étain dopé à l'arsenic SnO₂:As ou à l'antimoine SnO₂:Sb, ou à base d'oxyde d'indium dopé à l'étain ITO, sur un substrat (1), notamment transparent, procédé comportant au moins les phases suivantes :
(a) préparation d'un sol à partir d'au moins un précurseur métallique, d'au moins un agent chélatant/stabilisant, éventuellement d'au moins un solvant et/ou d'au moins un précurseur dopant,
(b) dépôt du sol en couche sur au moins une partie d'une des faces du substrat (1),
(c) irradiation par des rayons ultraviolets d'au moins une partie du sol déposé en couche sur le substrat (1),
(d) traitement thermique d'au moins la partie du sol qui a été irradiée par les rayons ultraviolets.

2. Procédé selon la revendication 1, ***caractérisé en ce que*** la phase **(c)** d'irradiation est répétée n fois, avec n ≥ 1.

3. Procédé selon la revendication 1, ***caractérisé en ce que*** la phase (d) de traitement thermique est répétée p fois, avec p ≥ 1.

4. Procédé selon l'une des revendications précédentes, ***caractérisé en ce qu'au*** moins la phase (c) d'irradiation et/ou la phase (d) de traitement thermique est au moins répétée une fois, de façon à alterner la (les) phase(s) d'irradiation et la (les) phase(s) de traitement thermique.

5. Procédé selon l'une des revendications précédentes, ***caractérisé en ce que*** les phases d'irradiation (c) et de traitement thermique (d) sont faites sur l'ensemble de la couche de sol déposée sur le substrat (1), en vue d'obtenir une couche continue à base d'oxyde métallique.

6. Procédé selon l'une des revendications précédentes, ***caractérisé en ce que*** la phase d'irradiation (c) ou au moins l'une des phases d'irradiation (c) est effectuée de façon sélective, en vue d'obtenir une couche discontinue/gravée à base d'oxyde métallique.

7. Procédé selon la revendication 6, ***caractérisé en ce que*** la phase d'irradiation sélective s'obtient par interposition d'un masque entre la couche de sol et la source d'émission des rayons ultraviolets.

8. Procédé selon l'une des revendications 6 ou 7, ***caractérisé en ce que*** la phase d'irradiation sélective (c) ou au moins l'une de ces phases comprend les étapes suivantes :
- dépôt d'un masque sur ou à proximité de la couche de sol,
- irradiation par rayonnements ultraviolets de la couche de sol à travers ledit masque,
- retrait du masque,
- élimination des zones de la couche de sol qui étaient masquées lors de l'irradiation.

9. Procédé selon l'une des revendications précédentes, ***caractérisé en ce que*** le(s) précurseur(s) métallique(s) est (sont) choisi(s) parmi des sels métalliques du type halogénure, des composés organo-métalliques, des alkoxydes métalliques.

10. Procédé selon la revendication 9, ***caractérisé en ce que*** les précurseurs métalliques sont des précurseurs d'étain sous forme de SnCl₂, SnCl₄, Sn-2-éthylhexanoate, Sn(OR)₄, SnR'(OR)₃, avec R et R' des radicaux carbonés.

11. Procédé selon l'une des revendications précédentes, ***caractérisé en ce que*** le(s) agent(s) chélatant(s)/stabilisant(s) est (sont) choisi(s) parmi des molécules organiques à fonction cétone et/ou ester, notamment les β-dicétones du type 2,4-pentanedione, 1 phényl-1,3 butanedione, éthylacétoacétate.

12. Procédé selon l'une des revendications précédentes, ***caractérisé en ce que*** le précurseur dopant est choisi parmi les acides organiques fluorés du type acide trifluoroacétique ou parmi les halogénures métalliques du type SbCl₃, SbCl₅.

13. Procédé selon l'une des revendications précédentes, ***caractérisé en ce que*** le solvant est organique, notamment à fonction alcool du type éthanol, isopropanol, ou inorganique, notamment sous forme d'une solution d'hydroxyde de sodium, d'eau avec de l'ammoniaque.

14. Procédé selon l'une des revendications 7 ou 8, ***caractérisé en ce que*** le masque est à base de résine du type photomasque déposé par photolithographie ou est déposé sur un substrat du type substrat verrier.

15. Procédé selon l'une des revendications précédentes, ***caractérisé en ce que*** le dépôt du sol (b) se fait par effet centrifuge, trempé, enduction laminaire, pulvérisation.

16. Procédé selon l'une des revendications précédentes, ***caractérisé en ce que*** la phase (c) d'irradiation utilise des rayonnements compris entre 250 et 360 nm, avec de préférence une intensité au niveau de la couche de sol comprise entre 100 et 200 mW/cm².

17. Procédé selon l'une des revendications précédentes, ***caractérisé en ce que*** le traitement thermique (d) s'effectue à au moins 100°C, notamment entre 200 et 550°C.

18. Substrat (1), notamment transparent, ***caractérisé en ce qu'il*** comporte une couche (2) continue ou discontinue/gravée à base d'oxyde(s) métallique(s) obtenue par voie sol-gel selon le procédé conforme à l'une des revendications précédentes.

19. Substrat (1) selon la revendication 18, ***caractérisé en ce qu'il*** est transparent, verrier ou à base de polymère(s) organique(s) ou à base de matériau céramique, vitrocéramique ou à base de silicium.

20. Substrat (1) selon la revendication 18 ou la revendication 19, ***caractérisé en ce qu'il*** est muni d'au moins une autre couche mince, notamment en matériau diélectrique comme les oxydes métalliques TiO₂, ZrO₂ ou les oxydes, oxycarbures, oxynitrures ou nitrures de silicium, disposée sous la couche (2) continue ou discontinue/gravée obtenue par voie sol-gel.

21. Application du procédé de dépôt selon l'une des revendications 1 à 17 au dépôt de couche sur des substrats transparents du type verrier ou à base de polymère(s) organique(s), sur des substrats à base de céramique ou vitrocéramique, sur des substrats à base de silicium.

22. Application du procédé selon l'une des revendications 1 à 17 ou du substrat selon l'une des revendications 18 à 20 pour la fabrication d'électrodes/éléments conducteurs, de revêtements anti-statiques ou de revêtements à fonction d'écran vis-à-vis de rayonnements électromagnétiques, notamment dans l'industrie verrière, par exemple pour des vitrages chauffants, vitrages à antenne, dans l'industrie électronique, notamment pour des écrans émissifs du type écran plat tels que les écrans plasma ou pour les écrans tactiles, dans l'industrie des cellules photovoltaïques.

## Patentansprüche

1. Verfahren zum Aufbringen einer kontinuierlichen oder in Form eines Musters vorliegenden diskontinuierlichen Schicht auf der Basis von Zinnoxid oder von Zinnoxid, das insbesondere mit einem Halogen vom Typ Fluor, SnO₂:F, oder mit einem Metall der Gruppe Va des Periodensystems der Elemente dotiert ist, vom Typ mit Arsen, SnO₂:As, bzw. Antimon, SnO₂:Sb, dotiertes Zinnoxid, oder auf der Basis von mit Zinn dotiertem Indiumoxid, ITO, auf dem Sol-Gel-Wege auf ein speziell transparentes Substrat (1), welches wenigstens die Stufen
a) Herstellen eines Sols aus mindestens einem Metallvorläufer, mindestens einem chelatisierenden/stabilisierenden Mittel, gegebenenfalls mindestens einem Lösungsmittel und/oder mindestens einem Dotiermittel-Vorläufer,
b) Aufbringen des Sols in Schichtform auf wenigstens einem Teil einer Seite des Substrats (1),
c) Bestrahlen wenigstens eines Teils des auf das Substrat (1) schichtförmig aufgebrachten Sols durch Ultraviolettstrahlung und
d) Wärmebehandeln wenigstens des Teils des Sols, das durch die Ultraviolettstrahlung bestrahlt worden ist,
umfasst.

2. Verfahren nach Anspruch 1, **dadurch gekennzeichnet, dass** die Bestrahlungsstufe c) n Mal, mit n ≥ 1, wiederholt wird.

3. Verfahren nach Anspruch 1, **dadurch gekennzeichnet, dass** die Wärmebehandlungsstufe d) p Mal, mit p ≥ 1, wiederholt wird.

4. Verfahren nach einem der vorhergehenden Ansprüche, **dadurch gekennzeichnet, dass** wenigstens die Bestrahlungsstufe c) und/oder die Wärmebehandlungsstufe d) mindestens derart einmal wiederholt wird, dass sich die Bestrahlungsstufe/n und die Wärmebehandlungsstufe/n abwechseln.

5. Verfahren nach einem der vorhergehenden Ansprüche, **dadurch gekennzeichnet, dass** die Bestrahlungsstufen c) und die Wärmebehandlungsstufe d) auf der gesamten auf dem Substrat (1) aufgebrachten Solschicht durchgeführt werden, um eine kontinuierliche Schicht auf der Basis eines Metalloxids zu erhalten.

6. Verfahren nach einem der vorhergehenden Ansprüche, **dadurch gekennzeichnet, dass** die Bestrahlungsstufe c) oder mindestens eine der Bestrahlungsstufen c) selektiv durchgeführt wird/werden, um eine in Form eines Musters vorliegende/diskontinuierliche Schicht auf der Basis eines Metalloxids zu erhalten.

7. Verfahren nach Anspruch 6, **dadurch gekennzeichnet, dass** die selektive Bestrahlungsstufe durch Anordnung einer Maske zwischen der Solschicht und der Quelle für die Ultraviolettstrahlung durchgeführt wird.

8. Verfahren nach Anspruch 6 oder 7, **dadurch gekennzeichnet, dass** die selektive Bestrahlungsstufe c) oder mindestens eine dieser Stufen die Schritte:
- Anordnen einer Maske auf oder in der Nähe der Solschicht,
- Bestrahlung der Solschicht mit Ultraviolettstrahlung durch diese Maske,
- Abnehmen der Maske und
- Entfernen der Bereiche der Solschicht, die während der Bestrahlung abgedeckt waren,
umfasst.

9. Verfahren nach einem der vorhergehenden Ansprüche, **dadurch gekennzeichnet, dass** der/die Metallvorläufer aus Metallsalzen vom Typ Halogenid, metallorganische Verbindungen und Metallalkoxide ausgewählt ist/sind.

10. Verfahren nach Anspruch 9, **dadurch gekennzeichnet, dass** die Metallvorläufer Zinnvorläufer in Form von SnCl₂, SnCl₄, Sn-2-ethylhexanoat, Sn(OR)₄ und SnR'(OR)₃ sind, wobei R und R' Kohlenwasserstoffreste bedeuten.

11. Verfahren nach einem der vorhergehenden Ansprüche, **dadurch gekennzeichnet, dass** das/die Chelatierungs-/Stabilisierungsmittel aus organischen Molekülen mit Keton- und/oder Esterfunktion, insbesondere β-Diketonen vom Typ 2,4-Pentandion, 1-Phenyl-1,3-butandion und Ethylacetacetat, ausgewählt ist/sind.

12. Verfahren nach einem der vorhergehenden Ansprüche, **dadurch gekennzeichnet, dass** der Dotiermittel-Vorläufer aus fluorierten organischen Säuren vom Typ Trifluoressigsäure oder aus Metallhalogeniden vom Typ SbCl₃ und SbCl₅ ausgewählt ist.

13. Verfahren nach einem der vorhergehenden Ansprüche, **dadurch gekennzeichnet, dass** das Lösungsmittel ein organisches, insbesondere mit Alkoholfunktion vom Typ Ethanol und Isopropanol, oder ein anorganisches, insbesondere in Form von Natronlauge und Ammoniakwasser, ist.

14. Verfahren nach Anspruch 7 oder 8, **dadurch gekennzeichnet, dass** die Maske auf der Basis eines Harzes vom Typ Photomaske ist, die durch Photolithographie aufgebracht wird, oder auf einem Substrat vom Typ Glassubstrat aufgebracht wird.

15. Verfahren nach einem der vorhergehenden Ansprüche, **dadurch gekennzeichnet, dass** das Aufbringen b) des Sols durch Zentrifugieren, Eintauchen, Walzenbeschichten und Aufsprühen erfolgt.

16. Verfahren nach einem der vorhergehenden Ansprüche, **dadurch gekennzeichnet, dass** in der Bestrahlungsstufe c) eine Strahlung mit einer Wellenlänge von 250 bis 360 nm und mit vorzugsweise einer Stärke von 100 bis 200 mW/cm² an der Solschicht verwendet wird.

17. Verfahren nach einem der vorhergehenden Ansprüche, **dadurch gekennzeichnet, dass** die Wärmebehandlung d) bei mindestens 100 °C und insbesondere zwischen 200 und 550 °C erfolgt.

18. Substrat (1), das insbesondere transparent ist, **dadurch gekennzeichnet, dass** es eine kontinuierliche oder in Form eines Musters vorliegende/diskontinuierliche Schicht (2) auf der Basis eines/mehrerer Metalloxide/s umfasst, die gemäß dem Verfahren nach einem der vorhergehenden Ansprüche auf dem Sol-Gel-Weg erhalten worden ist.

19. Substrat (1) nach Anspruch 18, **dadurch gekennzeichnet, dass** es transparent ist, aus Glas besteht oder auf der Basis von einem/mehreren organischen Polymer/en, auf der Basis eines keramischen bzw. glaskeramischen Materials oder auf der Basis von Silicium ist.

20. Substrat (1) nach Anspruch 18 oder 19, **dadurch gekennzeichnet, dass** es mit mindestens einer weiteren dünnen Schicht versehen ist, insbesondere aus einem dielektrischen Material wie einem Metalloxid, TiO₂ und ZrO₂ oder Siliciumoxid, -carbidoxid, -nitridoxid oder -nitrid, die unter der auf dem Sol-Gel-Weg erhaltenen kontinuierlichen oder in Form eines Musters vorliegenden/diskontinuierlichen Schicht (2) aufgebracht worden ist.

21. Anwendung des Abscheideverfahrens nach einem der Ansprüche 1 bis 17 auf das Aufbringen einer Schicht auf einem transparenten Substrat vom Typ Glas oder auf der Basis von einem/mehreren organischen Polymer/en auf einem Substrat auf der Basis von Keramik bzw. Glaskeramik oder einem Substrat auf der Basis von Silicium.

22. Anwendung des Verfahrens nach einem der Ansprüche 1 bis 17 oder Verwendung des Substrats nach einem der Ansprüche 18 bis 20 zur Herstellung von Elektroden/leitfähigen Elementen, antistatischen Beschichtungen oder Beschichtungen mit Abschirmungsfunktion vor elektromagnetischer Strahlung, insbesondere in der Glasindustrie, beispielsweise für beheizbare Verglasungen, und mit einer Antenne versehene Verglasungen, in der Elektronikindustrie, insbesondere für selbstleuchtende Bildschirme vom Typ Flachbildschirme wie Plasmabildschirme oder berührungsempfindliche Bildschirme, und im Industriezweig der Photovoltaikzellen.

## Claims

1. Method of deposition by a sol-gel process of a continuous or etched discontinuous layer based on tin oxide or based on tin oxide doped, in particular with a halogen of the fluorine type SnO₂:F, or with a metal from the Va column of the periodic table of the tin oxide type doped with arsenic SnO₂:As or with antimony SnO₂:Sb, or based on indium oxide doped with tin ITO, on a substrate (1), in particular a transparent substrate, said method comprising at least the following phases:
(a) preparation of a sol from at least one metal precursor, at least one chelating/stabilising agent, possibly at least one solvent and/or at least one dopant precursor;
(b) deposition of the sol in a layer on at least part of one of the faces of the substrate (1);
(c) irradiation by ultraviolet rays of at least part of the sol deposited in a layer on the substrate (1);
(d) heat treatment of at least the part of the sol which was irradiated by the ultraviolet rays.

2. Method according to Claim 1, **characterised in that** the irradiation phase (c) is repeated n times, with n ≥ 1.

3. Method according to Claim 1, **characterised in that** the heat treatment phase (d) is repeated p times, with p ≥ 1.

4. Method according to one of the preceding claims, **characterised in that** at least the irradiation phase (c) and/or the heat treatment phase (d) is repeated at least once, so as to alternate the irradiation phase or phases and the heat treatment phase or phases.

5. Method according to one of the preceding claims, **characterised in that** the irradiation (c) and heat treatment (d) phases are carried out on the entire sol layer deposited on the substrate (1), with a view to obtaining a continuous layer based on metal oxide.

6. Method according to one of the preceding claims, **characterised in that** the irradiation phase (c) or at least one of the irradiation phases (c) is performed selectively, with a view to obtaining a discontinuous/etched layer based on metal oxide.

7. Method according to Claim 6, **characterised in that** the selective irradiation phase is obtained by interposition of a mask between the sol layer and the source of emission of the ultraviolet rays.

8. Method according to either of Claims 6 or 7, **characterised in that** the selective irradiation phase (c) or at least one of these phases comprises the following steps:
- deposition of a mask on or in proximity to the sol layer;
- irradiation by ultraviolet radiation of the sol layer through said mask;
- removal of the mask;
- elimination of the areas of the sol layer which were masked during the irradiation.

9. Method according to one of the preceding claims, **characterised in that** the metal precursor or precursors is/are chosen from amongst metal salts of the halide type, organometallic compounds, or metal alkoxides.

10. Method according to Claim 9, **characterised in that** the metal precursors are tin precursors in the form of SnCl₂, SnCl₄, Sn-2-ethylhexanoate, Sn(OR)₄, SnR'(OR)₃, with R and R' carbon-containing radicals.

11. Method according to one of the preceding claims, **characterised in that** the chelating/stabilising agent or agents is/are chosen from amongst organic molecules with a ketone and/or ester function, in particular the β-diketones of the 2,4-pentanedione, 1 phenyl-1,3 butanedione or ethyl acetoacetate type.

12. Method according to one of the preceding claims, **characterised in that** the dopant precursor is chosen from amongst the fluorinated organic acids of the trifluoroacetic acid type or from amongst the metal halides of the SbCl₃ or SbCl₅ type.

13. Method according to one of the preceding claims, **characterised in that** the solvent is organic, in particular with an alcohol function of the ethanol or isopropanol type, or inorganic, in particular in the form of a solution of sodium hydroxide, or of water with ammonia.

14. Method according to either of Claims 7 or 8, **characterised in that** the mask is based on resin of the photomask type deposited by photolithography or is deposited on a substrate of the glass substrate type.

15. Method according to one of the preceding claims, **characterised in that** the deposition of the sol (b) is carried out by spin coating, dip coating, roller coating or spraying.

16. Method according to one of the preceding claims, **characterised in that** the irradiation phase (c) uses radiation of between 250 nm and 360 nm, with preferably an intensity at the level of the sol layer of between 100 mW/cm² and 200 mW/cm².

17. Method according to one of the preceding claims, **characterised in that** the heat treatment (d) is performed at at least 100°C, and in particular between 200°C and 550°C.

18. Substrate (1), in particular a transparent substrate, **characterised in that** it comprises a continuous or discontinuous/etched layer (2) based on metal oxide or oxides obtained by a sol-gel process according to the method in accordance with one of the preceding claims.

19. Substrate (1) according to Claim 18, **characterised in that** it is transparent, glass or based on organic polymer or polymers or based on ceramic or glass-ceramic material, or based on silicon.

20. Substrate (1) according to Claim 18 or Claim 19, **characterised in that** it is provided with at least one other thin layer, in particular of a dielectric material such as the metal oxides TiO₂, ZrO₂ or the oxides, oxycarbides, oxynitrides or nitrides of silicon, disposed under the continuous or discontinuous/etched layer (2) obtained by a sol-gel process.

21. Application of the deposition method according to one of Claims 1 to 17 to the layer deposition on transparent substrates of the glass type or of the type based on organic polymer or polymers, on substrates based on ceramic or glass-ceramic, or on substrates based on silicon.

22. Application of the method according to one of Claims 1 to 17 or of the substrate according to one of Claims 18 to 20 for the manufacture of electrodes/conductive elements, antistatic coatings or coatings with a screening function with regard to electromagnetic radiation, in particular in the glass industry, for example for heated glazing panes, glazing panes with aerials, in the electronics industry, in particular for emissive screens of the flat screen type such as plasma screens or for touch screens, or in the photovoltaic cell industry.
